# EUROPEAN PATENT SPECIFICATION

(11) **EP 4 535 812 B1**
(45) Date of publication and mention of the grant of the patent: **09.12.2026**
(21) Application number: 23815757.2
(22) Date of filing: 16.05.2023
(51) Int. Cl.: H04N 23/667, H04N 23/661, G03B 7/093, G03B 15/00, G03B 17/00, G03B 17/38, G03B 17/56, H04N 23/69, H04N 23/695, H04N 23/73, G06T 7/55, H04N 23/65, H04N 23/60, H04N 23/71, H04N 23/57, G05D 1/689, G05D 109/25, G05D 105/80

(54) **IMAGING INSTRUCTION METHOD, MOVING OBJECT, AND PROGRAM**
BILDGEBUNGSANWEISUNGSVERFAHREN, BEWEGLICHES OBJEKT UND PROGRAMM
PROCÉDÉ D'INSTRUCTION D'IMAGERIE, OBJET MOBILE ET PROGRAMME

(30) Priority: 31.05.2022 JP 2022088340
(43) Date of publication of application: 09.04.2025
(73) Proprietor: Sony Group Corporation, Tokyo 108-0075 (JP)
(72) Inventor: MIZUSAWA Satoru, Tokyo 108-0075 (JP)
(74) Representative: D Young & Co LLP
(86) International application number: PCT/JP2023/018211
(87) International publication number: WO 2023/233997

(56) References cited:
- WO-A1-2018/073878
- WO-A1-2019/163119
- WO-A1-2020/004029
- US-A1- 2011 106 434
- US-A1- 2017 142 309
- US-A1- 2020 014 913
- US-A1- 2021 055 721

## Description

### [Technical Field]

The present disclosure relates to a photographing instruction method, a mobile body, and a program, and more particularly relates to a photographing instruction method, a mobile body, and a program that can more reliably perform rephotographing.

### [Background Art]

In recent years, systems that use images shot from mobile bodies such as drones to, for example, inspect structures or survey landscapes are about to be put in practical use.

PTL 1 discloses an unmanned mobile body that, when detecting a failure to photograph a target, rephotographs the target from a position at which the photographing failure has been detected. According to this technique, it is not necessary to perform the same flight for performing rephotographing when photographing fails, and reduce energy and a flight time of an unmanned mobile body consumed for rephotographing.

### [Citation List]

### [Patent Literature]

[PTL 1]
JP 2020-191523A

Other prior art is described in US2021/055721A, US2020/014913A, US2017/142309A, US2011/106434A, WO2019/163119A, WO2018/073878A and WO2020/004029A. WO2018/073878A appears to be particularly relevant as it discloses discloses a UAV-based 3D modeling method that reconstructs 3D shapes in real-time to detect missing data ("loss areas") during a flight mission. When a loss area is detected, the drone automatically generates and executes a new route to rephotograph it.

### [Summary]

### [Technical Problem]

However, there is also considered a probability that rephotographing from a position at which a photographing failure has been detected repeatedly fails depending on a state of a photographing target. In such a case, it is desirable to perform rephotographing according to a photographing method or condition matching the state of the photographing target.

With such a situation in view, the present disclosure enables more reliable rephotographing.

### [Solution to Problem]

A photographing instruction method according to the present disclosure is provided in claim 1.

A mobile body according to the present disclosure is provided in claim 12.

A program according to the present disclosure is provided in claim 13.

According to the present disclosure, a defective region of a photographing target is detected on the basis of a photographed image shot from a mobile body that moves on a predetermined movement route, a photographing mode of rephotographing of the defective region is determined according to a state of the defective region when the defective region is detected, and instruction information for instructing the rephotographing according to the determined photographing mode is generated.

### [Brief Description of Drawings]

[Fig. 1]

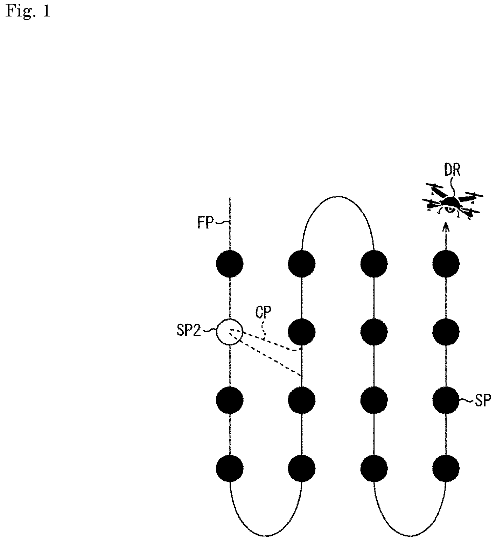

   Fig. 1 is a diagram for explaining an example of detection of a defective region and correction of a movement route.
[Fig. 2]

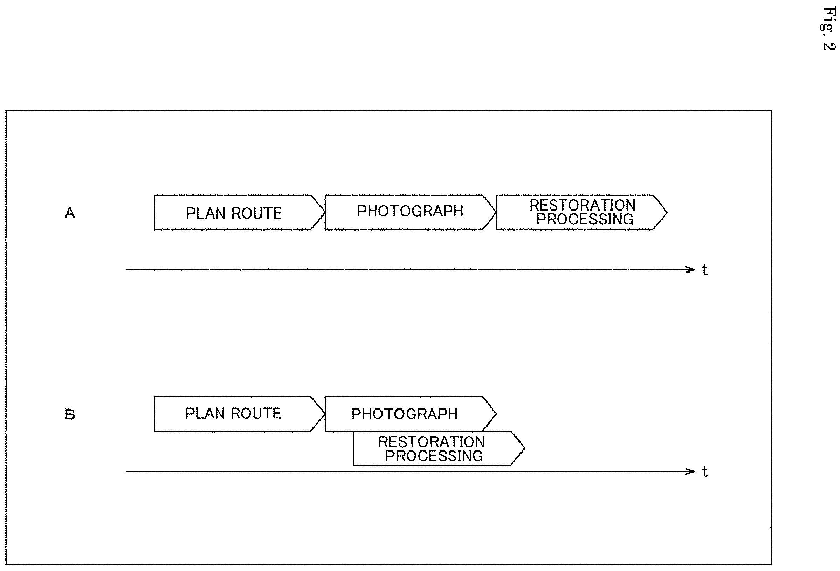

   Fig. 2 is a diagram for comparing a processing procedure of a conventional technique and a processing procedure of a technique according to the present disclosure.
[Fig. 3]

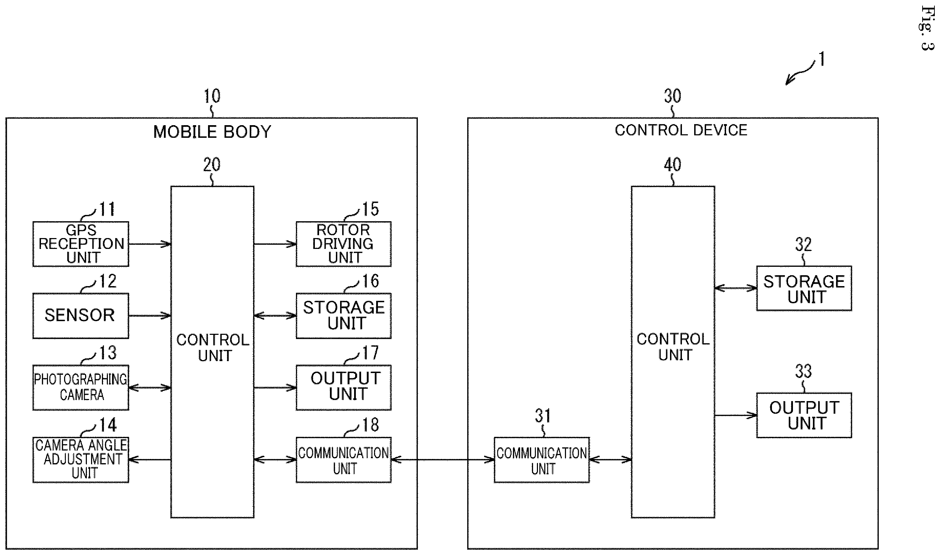

   Fig. 3 is a block diagram illustrating a configuration example of a photographing system not representing the claimed invention but useful for understanding the invention.
[Fig. 4]

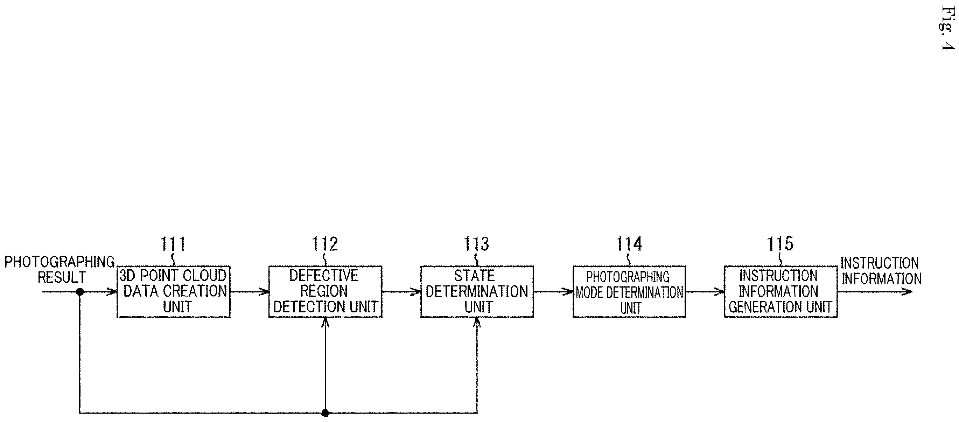

   Fig. 4 is a block diagram illustrating a functional configuration example of a control device.
[Fig. 5]

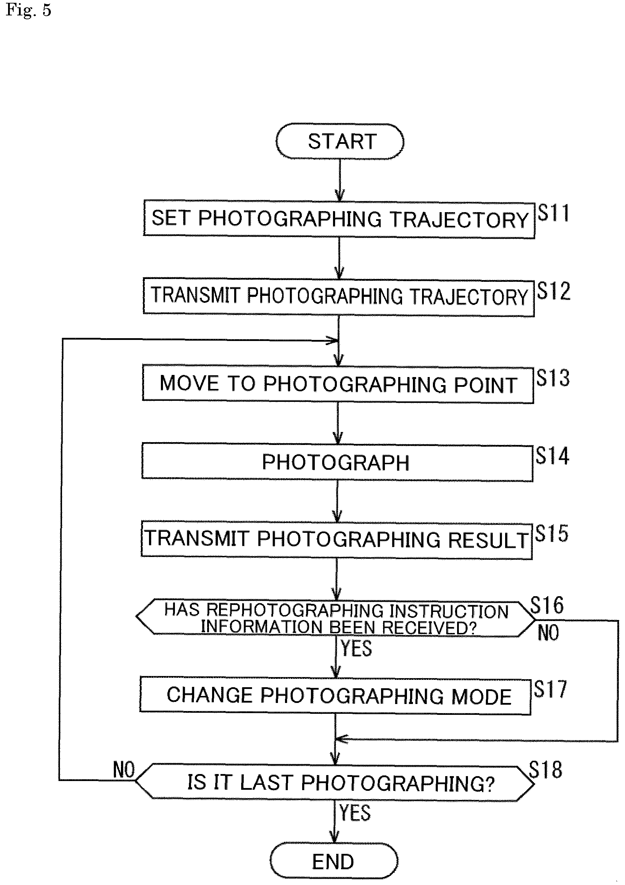

   Fig. 5 is a flowchart for explaining an operation of a mobile body.
[Fig. 6]

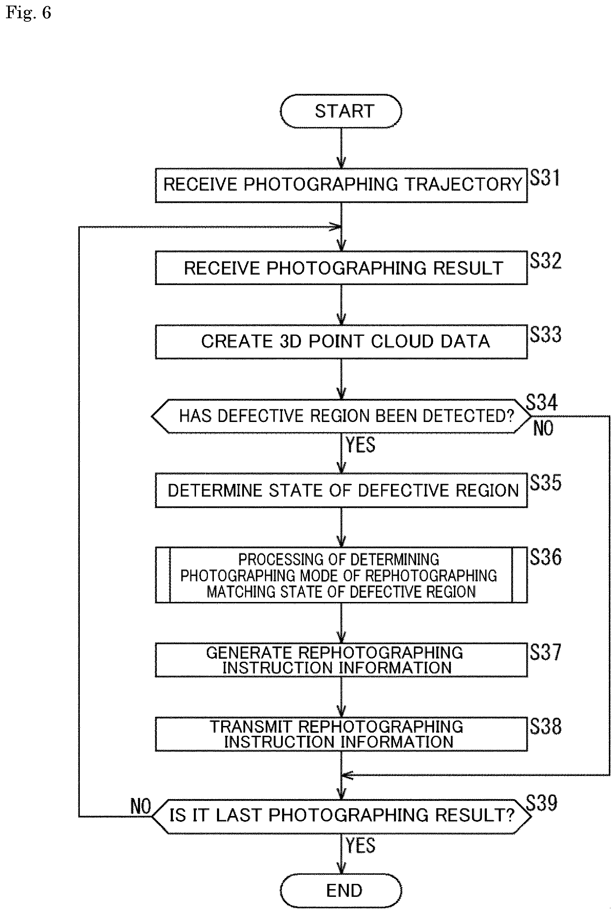

   Fig. 6 is a flowchart for explaining an operation of the control device.
[Fig. 7]

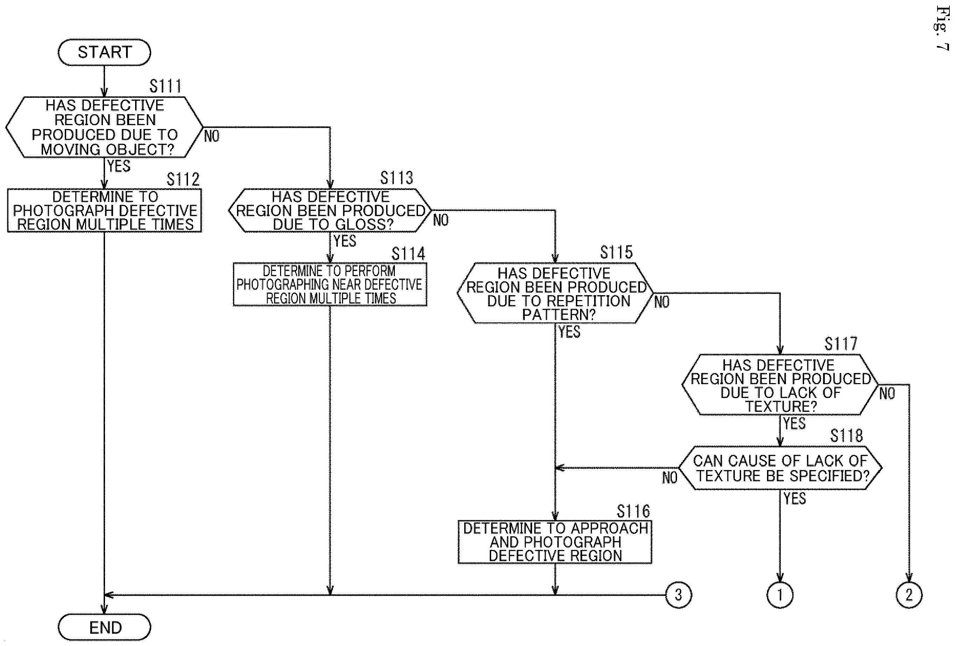

   Fig. 7 is a flowchart for explaining processing of determining a photographing mode.
[Fig. 8]

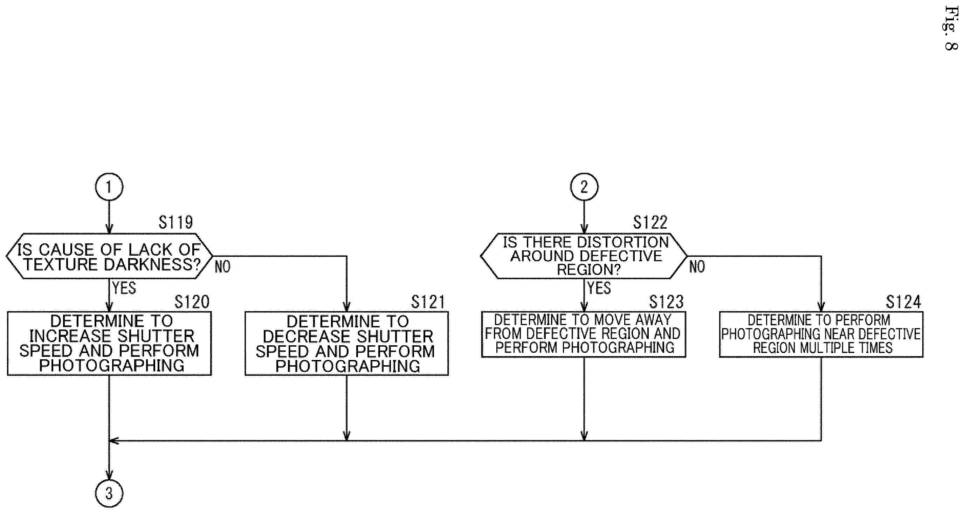

   Fig. 8 is a flowchart for explaining the processing of determining the photographing mode.
[Fig. 9]

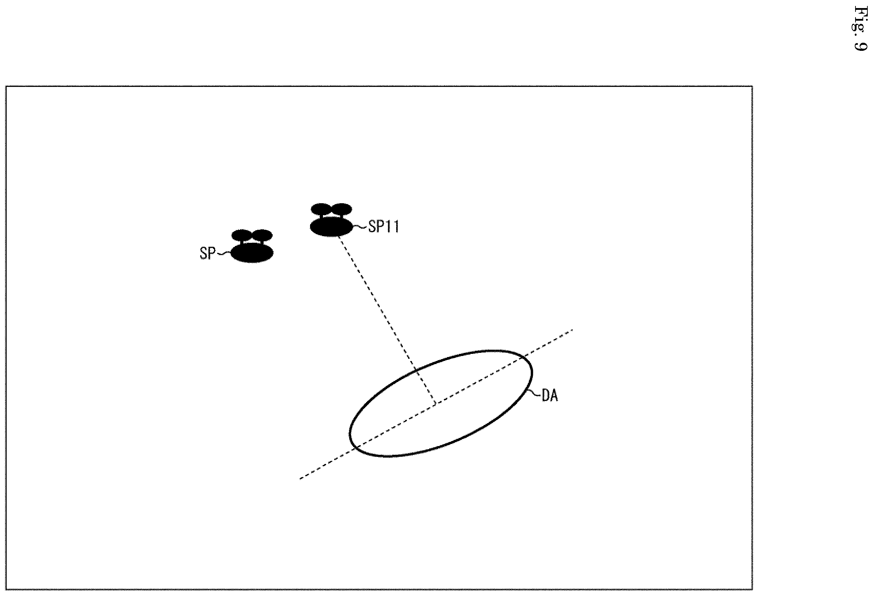

   Fig. 9 is a diagram illustrating an example of determination of the photographing mode.
[Fig. 10]

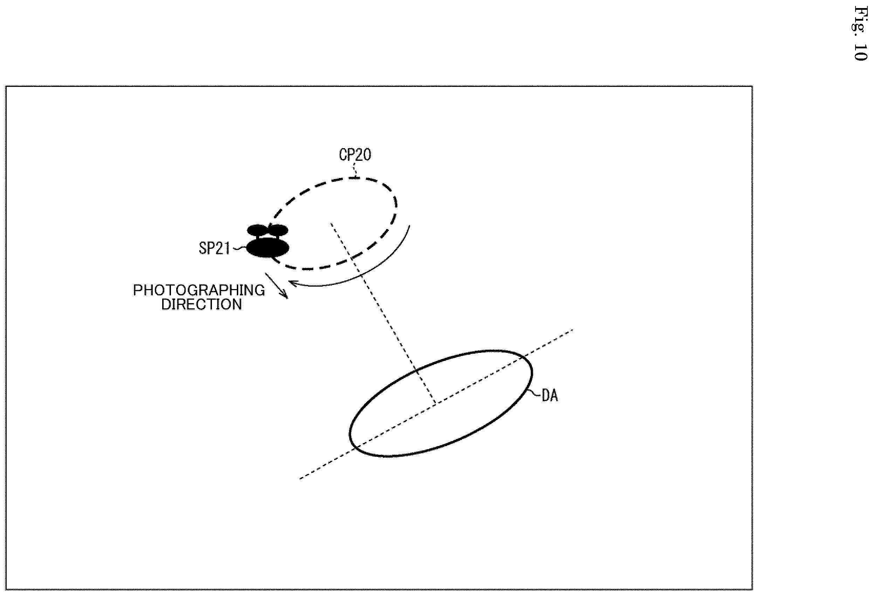

   Fig. 10 is a diagram illustrating an example of determination of the photographing mode.
[Fig. 11]

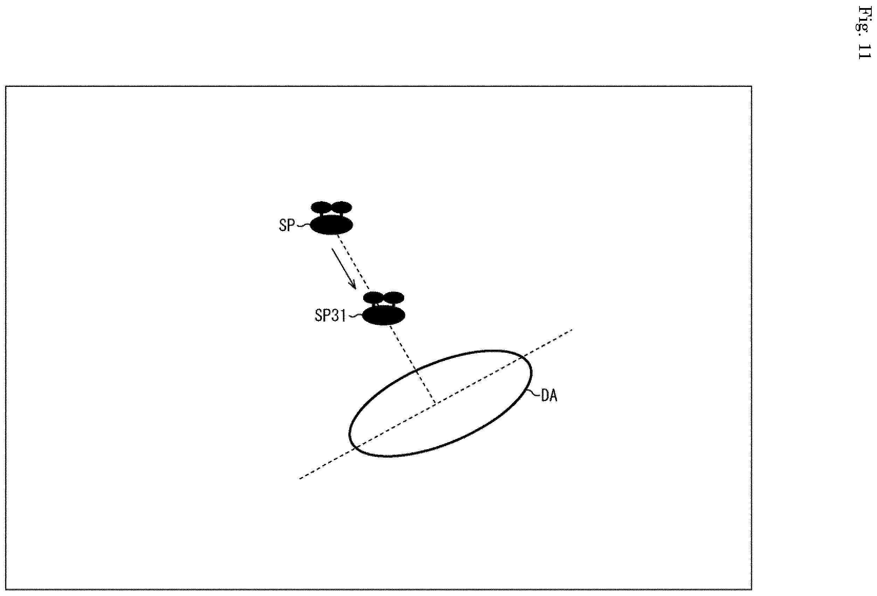

   Fig. 11 is a diagram illustrating an example of determination of the photographing mode.
[Fig. 12]

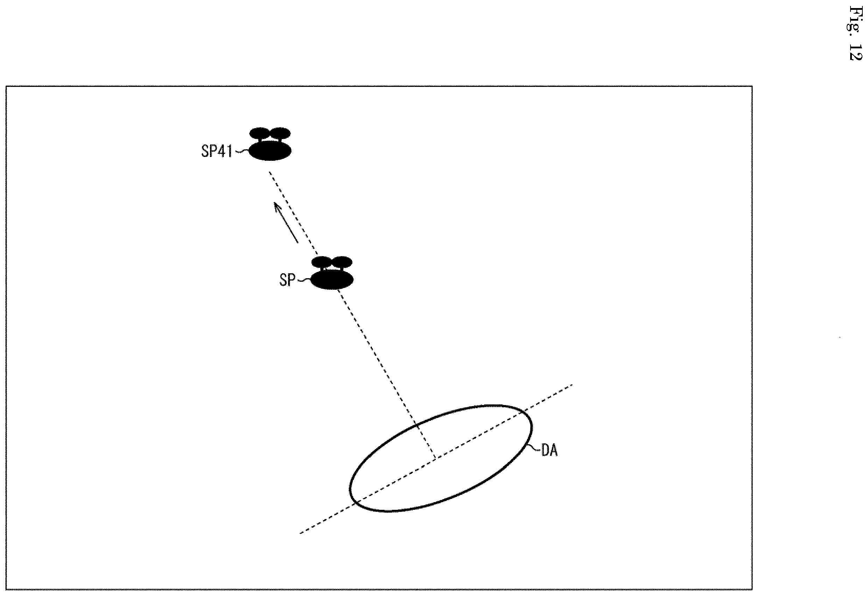

   Fig. 12 is a diagram illustrating an example of determination of the photographing mode.
[Fig. 13]

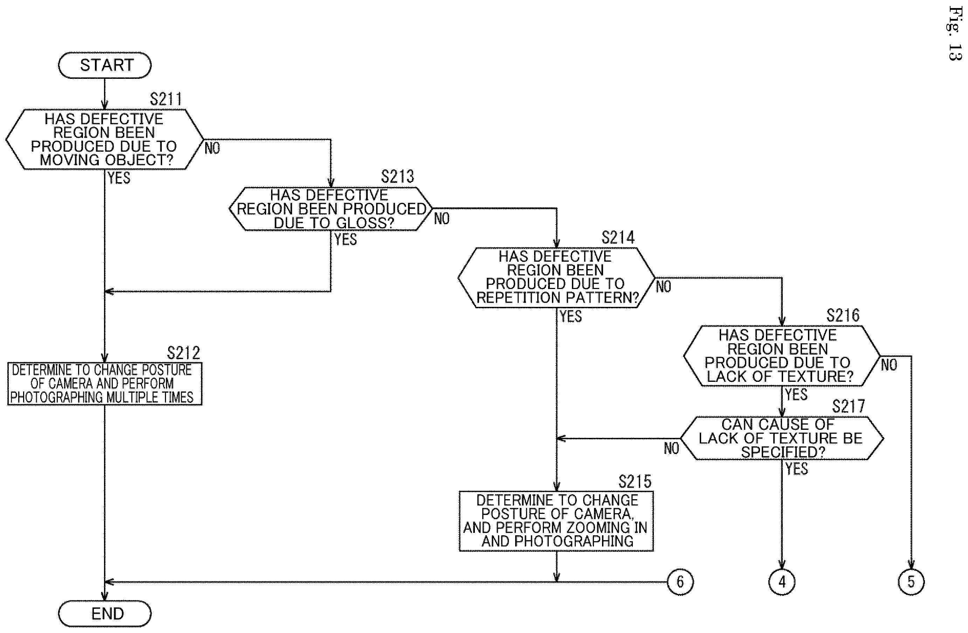

   Fig. 13 is a flowchart for explaining the processing of determining the photographing mode.
[Fig. 14]

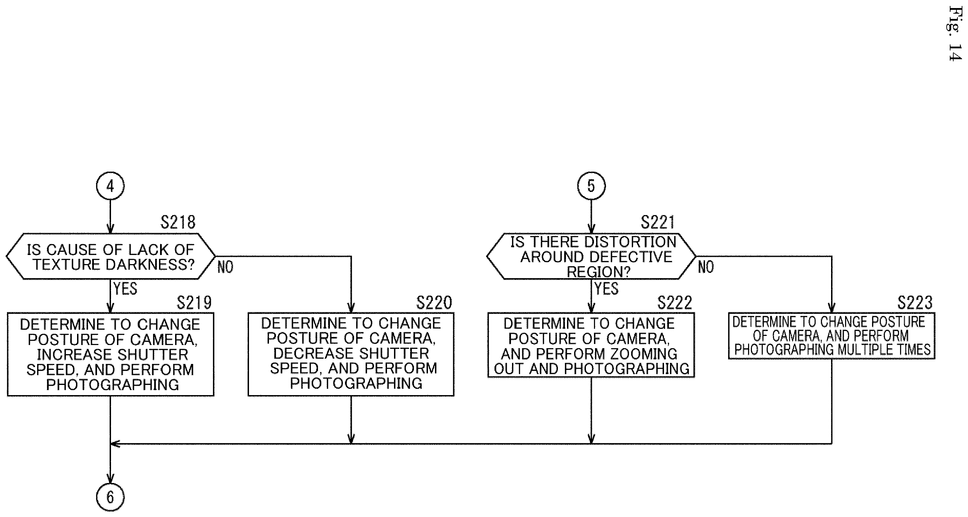

   Fig. 14 is a flowchart for explaining the processing of determining the photographing mode.
[Fig. 15]

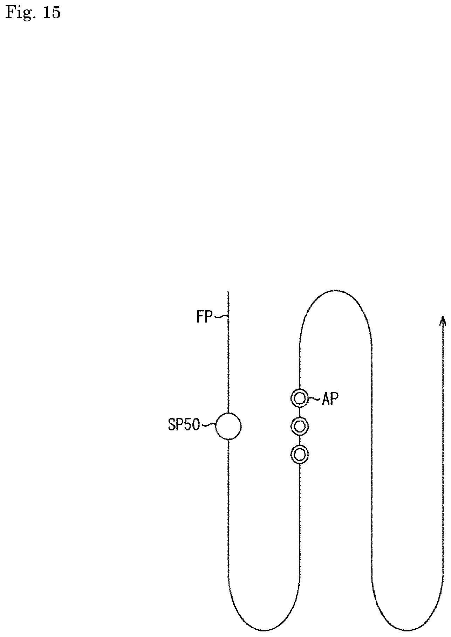

   Fig. 15 is a diagram for explaining addition of a photographing point.
[Fig. 16]

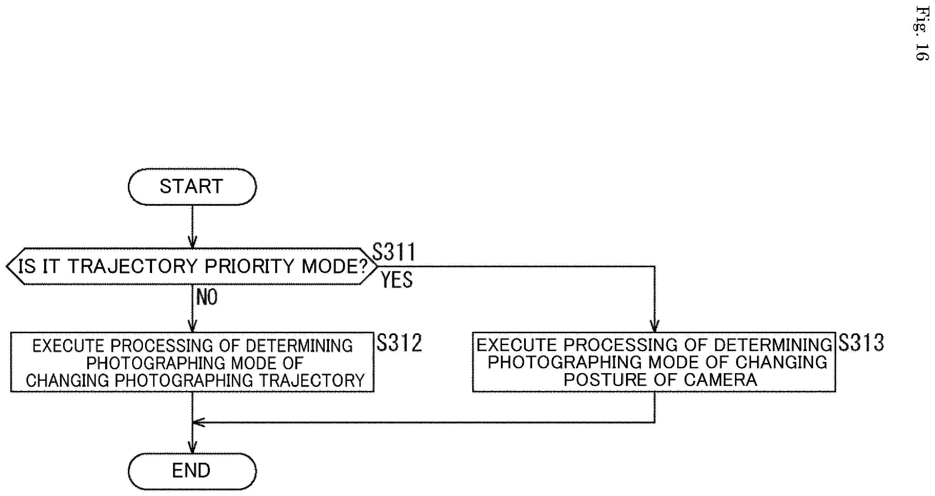

   Fig. 16 is a flowchart for explaining selection processing matching a setting mode.
[Fig. 17]

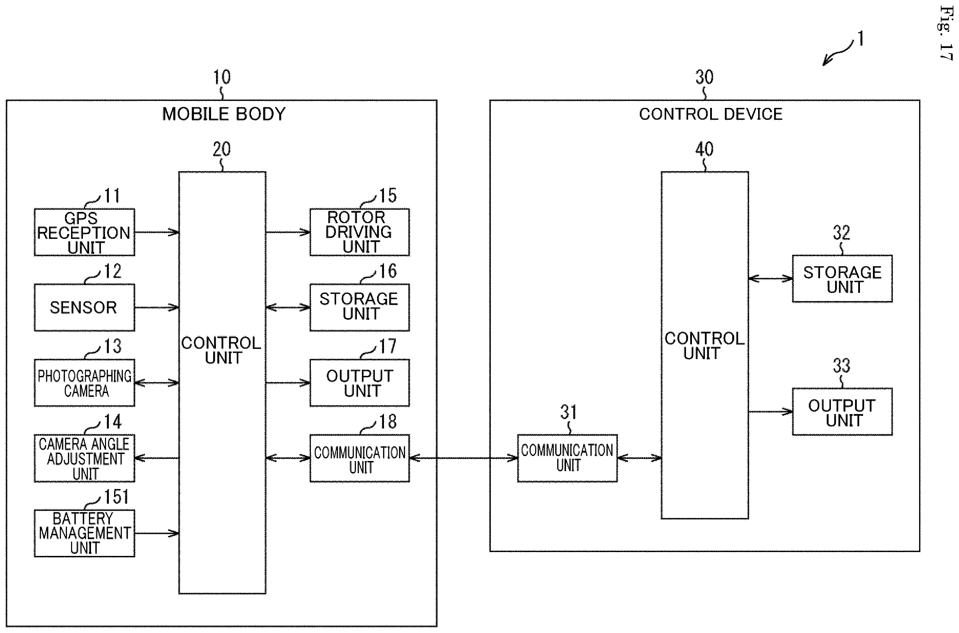

   Fig. 17 is a block diagram illustrating the configuration of the photographing system according to the invention.
[Fig. 18]

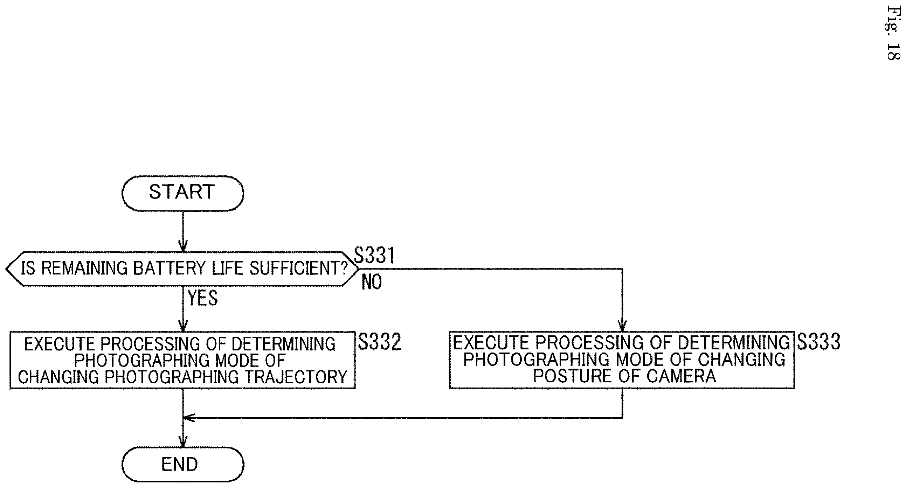

   Fig. 18 is a flowchart for explaining selection processing matching a remaining battery life.
[Fig. 19]

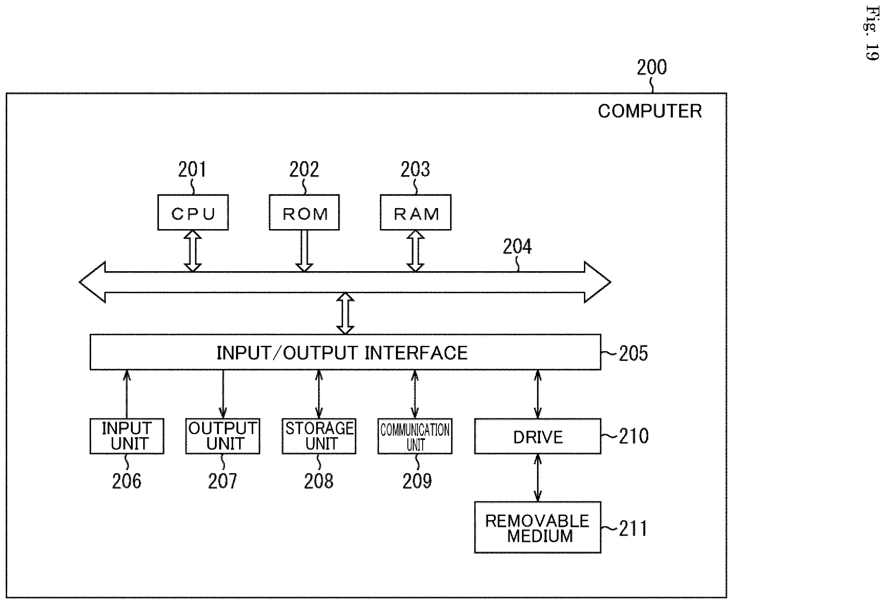

   Fig. 19 is a diagram illustrating a configuration example of a computer.

### [Description of Embodiments]

Hereinafter, modes for carrying out the present disclosure (hereinafter referred as embodiments) will be described. The description will be made in the following order.
1. Issue of Conventional Technique and Outline of Technique According to Present Disclosure
2. Configuration of Photographing System to Which Technique According to Present Disclosure is Applied
3. Operation of Mobile Body and Control Device
4. Processing of Determining Photographing Mode of Changing Movement Route
5. Processing of Determining Photographing Mode of Not Changing Movement Route
6. Selection Processing Matching Setting Mode
7. Selection Processing Matching Remaining Battery Life
8. Others
9. Configuration Example of Computer

### <1. Issue of Conventional Technique and Outline of Technique According to Present Disclosure>

In recent years, systems that use images shot from mobile bodies such as drones to, for example, inspect structures or survey landscapes are about to be put in practical use. There is known among these systems a Structure from Motion (SfM) technique that restores a three-dimensional shape from photographed images of a plurality of points of view obtained by shifting a photographing point a little by little and performing photographing. According to SfM, three-dimensional point cloud data (hereinafter, referred to as 3D point cloud data or simply as point cloud data) including highly dense point data as a three-dimensional shape to be restored based the basis of feature points of the photographed images of the plurality of points of view.

Restoration of the three-dimensional shape by SfM is performed by procedures of
(1) Planning of a route (photographing trajectory) of a mobile body (drone),
(2) Photographing at photographing points on a route,
(3) Planning for creation of point cloud data, and
(4) Checking of created point cloud data.

The procedures (3) and (4) are performed after the mobile body finishes whole photographing.

However, a defective region for which point data is not appropriately created in point cloud data may be produced depending on a state of a photographing target. When the presence of the defective region is found in the above-described procedure (4), it is necessary to redo the procedures from the procedure (1).

Hence, it is considered to perform photographing on a route and creation of point cloud data in parallel, detect a defective region in real time, and thereby prevent the above-described redoing.

As illustrated in Fig. 1, a mobile body DR moves on a predetermined movement route FP. Hence, even when, for example, a photographing target includes a moving object at a time of photographing at a certain photographing point SP, rephotographing cannot be performed at this photographing point SP, and, as a result, a defective region is produced. Furthermore, the mobile body 10 only moves on the determined movement route FP, and therefore even when a portion at which a defective region is readily produced can be recognized in advance, it has not been possible to thoroughly photograph this portion. Furthermore, the mobile body DR has difficulty in creating highly dense point cloud data in real time due to a problem of calculation cost, and therefore the presence of the defective region is found later.

Hence, according to the technique according to the present disclosure, when, for example, a cloud defects a defective region at a time of photographing at a photographing point SP2 illustrated in Fig. 1, the mobile body performs, for example, photographing a plurality of times on a corrected route CP obtained by correcting the movement route FP according to the state of the defective region. Consequently, it is possible to more reliably perform rephotographing. As a result, it is possible to reduce photographed images in which a defective region is produced, and acquire suitable point cloud data.

Fig. 2 is a diagram for comparing a processing procedure of the conventional technique and a processing procedure of the technique according to the present disclosure.

According to the conventional technique, as illustrated in A in Fig. 2, each processing of route planning, photographing, and restoration processing (creation of point cloud data) is sequentially performed as described above. On the other hand, as illustrated in B in Fig. 2, according to the technique according to the present disclosure, while the mobile body performs photographing, the cloud can detect a defective region, so that it is possible to perform photographing and restoration processing (creation of point cloud data) in parallel. Consequently, it is possible to acquire point cloud data in a short time without performing the above-described redoing.

### <2. Configuration of Photographing System to Which Technique According to Present Disclosure is Applied>

Fig. 3 is a diagram illustrating a configuration example of a photographing system to which the present disclosure is applied.

A photographing system 1 in Fig. 3 includes a mobile body 10 and a control device 30.

### (Configuration of Mobile Body 10)

The mobile body 10 may be configured as automated mobile robots such as a drone, an automated driving vehicle, an automated navigation ship, and an automated movement vacuum cleaner. In the present embodiment, the mobile body 10 is configured as a drone.

The mobile body 10 includes a GPS reception unit 11, a sensor 12, a photographing camera 13, a camera angle adjustment unit 14, a rotor driving unit 15, a storage unit 16, an output unit 17, a communication unit 18, and a control unit 20. Note that this configuration is merely exemplary and is not limited thereto.

The GPS reception unit 11 receives GPS signals emitted from GPS satellites, and detects an absolute position including the latitude and the altitude of the mobile body 10. The mobile body 10 performs automated movement according to photographing plan information including a predetermined movement route (photographing trajectory).

The sensor 12 includes a sensor such as an azimuth sensor, an altitude sensor, or a Laser Imaging Detection and Ranging (LiDAR) that is necessary for the mobile body 10 to perform automated movement. Sensing information output from the sensor 12 is used for, for example, control for performing automated movement according to the photographing plan information.

The photographing camera 13 is configured as a so-called gimbal camera, and is attached to a lower part of a machine body of the mobile body 10 with an unillustrated angle adjustment actuator interposed therebetween. The photographing camera 13 acquires a photographed image (RGB image) by performing photographing based on control of the control unit 20.

The camera angle adjustment unit 14 drives the angle adjustment actuator based on control of the control unit 20, and adjusts the angle of the photographing camera 13. The control unit 20 calculates an angle at which a photographing direction of the photographing camera 13 (the optical axis of a lens) is a vertical direction based on the sensing information output from the sensor 12, and adjusts the angle of the photographing camera 13 based on a calculation result of the angle.

The rotor driving unit 15 rotates a rotor connected to a propeller or the like based on control of the control unit 20. The control unit 20 controls automated movement along the photographing trajectory of the mobile body 10 based on the absolute position detected by the GPS reception unit 11 and the sensing information output from the sensor 12.

The storage unit 16 stores various pieces of information necessary to operate the mobile body 10. For example, the storage unit 16 stores photographing plan information prepared in advance, stores a program or software to be executed by the control unit 20, or stores the photographed images shot by the photographing camera 13.

The output unit 17 reads and outputs information stored in the storage unit 16. The configuration of the output unit 17 is not limited in particular, and, for example, the output unit 17 can include a display unit that displays photographed images of the storage unit 16 or can output the information read from the storage unit 16 to the control device 30 connected via the communication unit 18.

The communication unit 18 performs communication between the mobile body 10 and the control device 30 by wire or wirelessly. The control device 30 can control the mobile body 10 via the communication unit 18, and can, for example, set the photographing plan information to the storage unit 16 of the mobile body 10, receive photographed images shot from the mobile body 10, or give an instruction from a user to the control unit 20.

The control unit 20 controls each unit of the mobile body 10. For example, the control unit 20 includes a microcontroller including a Read Only Memory (ROM) and a Random Accesses Memory (RAM), a microprocessor, an image processing processor, and the like, and control automated movement of the mobile body 10 or photographing of a photographing target by executing the program and the software stored in the storage unit 16, the ROM, or the RAM.

### (Configuration of Control Device 30)

The control device 30 is configured as a cloud server that is provided on the cloud, and a general-purpose computer such as a PC. Furthermore, the control device 30 is configured as a PC or a tablet terminal that is operated by the user who operates or controls the mobile body 10, a proportional control system (controller), or a smartphone.

The control device 30 includes a communication unit 31, a storage unit 32, an output unit 33, and a control unit 40.

The communication unit 31 is configured as a network interface or the like, and performs communication with the mobile body 10 by wire or wirelessly.

The storage unit 32 is configured as a non-volatile memory such as a flash memory, and stores various pieces of information under control of the control unit 40.

The output unit 33 is configured as a display device such as a liquid crystal display or an organic EL display, and outputs various pieces of information according to control of the control unit 40.

The control unit 40 is configured as a processor such as a Central Processing Unit (CPU), and controls each unit of the control device 30 by executing a predetermined program.

The control device 30 configured as described above creates three-dimensional data from photographed images received from the mobile body 10, and outputs to the mobile body 10 instruction information for performing photographing based on a result of creation. The three-dimensional data includes point cloud data, depth information, mesh information, and the like, and is used for survey.

Fig. 4 is a block diagram illustrating a functional configuration example of the control device 30 that creates three-dimensional data from photographed images received from the mobile body 10, and outputs instruction information for performing photographing based on a result of creation as described above.

Each functional block illustrated in Fig. 4 is implemented by the control unit 40 of the control device 30 by executing the predetermined program. The control device 30 includes a three-dimensional (3D) point cloud data creation unit 111, a defective region detection unit 112, a state determination unit 113, a photographing mode determination unit 114, and an instruction information generation unit 115.

The 3D point cloud data creation unit 111 creates point cloud data of a photographing target based on a photographing result of each photographing point transmitted from the mobile body 10 that moves on a predetermined movement route (photographing trajectory). The photographing result includes photographed images shot by the photographing camera 13, and, in addition, times of photographing, GPS position information indicating the absolute position of the mobile body 10, the posture of the mobile body 10, the posture of the photographing camera 13, and the like.

That is, the 3D point cloud data creation unit 111 creates point cloud data of the photographing target based on a plurality of photographed images shot at a plurality of photographing points. The created point cloud data is supplied to the defective region detection unit 112.

The defective region detection unit 112 detects a defective region of the photographing target based on the point cloud data from the 3D point cloud data creation unit 111 and the photographing result (photographed images) from the mobile body 10.

More specifically, the defective region detection unit 112 detects as the defective region a region for which point data is not created in the point cloud data of the photographing target created by the 3D point cloud data creation unit 111. Here, a portion at which pixels do not match between a plurality of photographed images, in other words, a portion at which feature points cannot be associated is detected as the region for which the point data is not created.

The state determination unit 113 determines a state of the detected defective region based on the photographing result (photographed images) from the mobile body 10 when the defective region detection unit 112 detects the defective region. More specifically, the state determination unit 113 determines a factor (hereinafter, referred to as a non-creation factor) that the point data of the photographing target is not created as the state of the defective region detected by the defective region detection unit 112.

The photographing mode determination unit 114 determines the photographing mode of rephotographing of the defective region according to the state of the defective region determined by the state determination unit 113, that is, the non-creation factor of the photographing target. The photographing mode of rephotographing indicates a state or a situation that the mobile body 10 or the photographing camera 13 may have and a photographing method and condition when the defective region is rephotographed. For example, the photographing mode of rephotographing includes changing the movement route of the mobile body 10, changing the posture of the photographing camera 13 included in the mobile body 10, and the like. Furthermore, the photographing mode of rephotographing may include performing photographing a plurality of times, changing a shutter speed, and changing (zooming in/zooming out) a focal distance and, in addition, for example, adding a photographing point for rephotographing on the movement route.

The instruction information generation unit 115 generates instruction information for instructing rephotographing according to the photographing mode determined by the photographing mode determination unit 114. The generated instruction information (hereinafter, referred to as rephotographing instruction information) is transmitted to the mobile body 10. Consequently, the mobile body 10 or the photographing camera 13 can perform rephotographing according to the photographing mode based on the rephotographing instruction information.

### <3. Operations of Mobile Body and Control Device>

The operations of the mobile body 10 and the control device 30 having the above configuration will be described.

### (Operation of Mobile Body 10)

Fig. 5 is a flowchart for explaining the operation of the mobile body 10.

In step S11, the control unit 20 of the mobile body 10 sets the photographing trajectory (movement route) based on the operation of the user for determining, for example, a survey range or the like. The photographing trajectory includes the predetermined movement route and, in addition, a plurality of flight via points or photographing points indicated by GPS coordinates along this movement route, a photographing method (the photographing method or condition), and the like.

In step S12, the communication unit 18 transmits the set photographing trajectory to the control device 30 under control of the control unit 20.

For example, at this time, the mobile body 10 starts moving (flying) according to the set photographing trajectory. That is, in step S13, the control unit 20 moves the mobile body 10 to the photographing point determined on the photographing trajectory (movement route) by driving the rotor driving unit 15.

In step S14, the photographing camera 13 photographs the photographing target under control of the control unit 20. At this time, the control unit 20 controls photographing by the photographing camera 13 while setting photographing parameters such as the posture, the diaphragm, and an exposure time of the photographing camera 13 according to the photographing method included in the photographing trajectory.

In step S15, the communication unit 18 transmits the photographing result including the photographed images obtained by photographing to the control device 30 under control of the control unit 20.

The control device 30 transmits to the mobile body 10 the rephotographing instruction information when the rephotographing instruction information is generated on the basis of the photographing result from the mobile body 10.

That is, in step S16, the control unit 20 determines whether or not the communication unit 18 has received the rephotographing instruction information from the control device 30.

When it is determined that the rephotographing instruction information has been received, the processing proceeds to step S17, and the control unit 20 changes the photographing mode of rephotographing matching photographing based on the rephotographing instruction information.

On the other hand, when it is determined that the rephotographing instruction information is not received, it is determined that rephotographing for the photographing is unnecessary, and step S17 is skipped.

Subsequently, in step S18, the control unit 20 determines whether or not the photographing is last photographing (photographing at a last photographing point) based on the photographing trajectory.

When it is determined that the photographing is not the last photographing, the processing returns to step S13, and processing (steps S13 to S17) for a next photographing point is repeated.

On the other hand, when it is determined that the photographing is the last photographing, the mobile body 10 finishes moving (flying), and the processing ends.

### (Operation of Control Device 30)

Fig. 6 is a flowchart for explaining an operation of the control device 30. A series of operations illustrated in Fig. 6 are executed in parallel to the operation of the mobile body 10 described with reference to Fig. 5.

That is, when the photographing trajectory set by the mobile body 10 is transmitted from the mobile body 10, the communication unit 31 of the control device 30 receives this photographing trajectory in step S31. The received photographing trajectory is stored in the storage unit 32.

Next, when the photographing camera 13 of the mobile body 10 photographs the photographing target at the photographing points determined on the photographing trajectory, the communication unit 31 receives a photographing result from the mobile body 10 in step S32. The received photographing result is stored in the storage unit 32.

In step S33, the 3D point cloud data creation unit 111 creates 3D point cloud data of the photographing target based on a plurality of photographed images included in the photographing result stored in the storage unit 32. The 3D point cloud data is calculated using, for example, SfM. The created 3D point cloud data is stored in the storage unit 32, and is output to the output unit 33 that is the display device. Consequently, the user can visually recognize the visualized 3D point cloud data.

In step S34, the defective region detection unit 112 determines whether or not the defective region of the photographing target has been detected in the 3D point cloud data creation unit created by the 3D point cloud data creation unit 111. For example, the defective region detection unit 112 scans a surface of the 3D point cloud data, and detects as the defective region a region whose surroundings are surrounded by point data yet for which the point data is not calculated. Furthermore, by referring to a photographed image that is a creation source of the 3D point cloud data, the defective region detection unit 112 may detect the defective region according to whether or not there is a texture at a portion corresponding to the region for which the point data is not calculated in the photographed image.

When it is determined in step S34 that the defective region has been detected, the processing proceeds to step S35, and the state determination unit 113 determines the state of the defective region detected by the defective region detection unit 112. More specifically, the state determination unit 113 determines a non-creation factor based on image processing for the photographed image in which the defective region detected by the defective region detection unit 112 has been detected.

In step S36, the photographing mode determination unit 114 executes processing of determining the photographing mode of rephotographing according to the state of the defective region determined by the state determination unit 113, that is, the non-creation factor of the photographing target. Details of the processing of determining the photographing mode of the rephotographing will be described with reference to flowcharts in Figs. 7 and 8 to be described later.

In step S37, the instruction information generation unit 115 generates rephotographing instruction information for instructing rephotographing in the photographing mode determined by the photographing mode determination unit 114.

Furthermore, in step S38, the communication unit 31 transmits the rephotographing instruction information generated by the instruction information generation unit 115 to the mobile body 10, and the processing proceeds to step S39.

On the other hand, when it is determined in step S34 that the defective region has not been detected, steps S35 to S38 are skipped and the processing proceeds to step S39.

In step S39, the control unit 40 determines whether or not the photographing result is a last photographing result based on the photographing trajectory stored in the storage unit 32 and the photographing result from the mobile body 10.

When it is determined that the photographing result is not the last photographing, the processing returns to step S32, and processing (steps S32 to S38) for a next photographing point is repeated.

On the other hand, when it is determined that the photographing result is the last photographing, the processing ends.

### <4. Processing of Determining Photographing Mode of Changing Movement Route>

Next, details of processing of determining the photographing mode of rephotographing executed in step S36 in Fig. 6 will be described with reference to the flowcharts in Figs. 7 and 8. The photographing mode determined by this processing includes changing the movement route.

Note that it is assumed hereinafter that the state determination unit 113 determines a non-creation factor based on 3D point cloud data itself or a photographed image obtained by photographing a defective region from the closest photographing point. In addition, the non-creation factor may be determined on the basis of a photographed image showing the defective region specified using a position of the defective region on GPS coordinates, an angle of view and a posture of the photographing camera 13, and a position posture of the mobile body 10.

In step S111, the photographing mode determination unit 114 determines whether or not the defective region has been produced by a moving object that is the non-creation factor. Examples of the moving object may include vehicles (cars), people, animals, trees blown by wind, and the like. Here, the state determination unit 113 determines whether or not there is a moving object using an existing technique such as object determination using deep learning.

When it is determined in step S111 that the defective region has been produced by the moving object, the processing proceeds to step S112, and the photographing mode determination unit 114 determines to photograph the defective region a plurality of times as the photographing mode of rephotographing.

Here, as illustrated in Fig. 9, it is determined to perform photographing a plurality of times at a photographing point SP11 different from the original photographing point SP and closest to a GPS coordinate position of a defective region DA (a center of the defective region DA) on the photographing trajectory. Consequently, it is possible to photograph portions that cannot be photographed due to moving objects, and prevent defective regions from being hardly produced.

On the other hand, when it is determined in step S111 that the defective region is not produced due to the moving object, the processing proceeds to step S113.

In step S113, the photographing mode determination unit 114 determines whether or not the defective region has been produced due to gloss that is the non-creation factor. Here, the state determination unit 113 determines whether or not there is the gloss according to whether or not a brightness value of the defective region is a certain value or more.

When it is determined in step S113 that the defective region has been produced due to the gloss, the processing proceeds to step S114, and the photographing mode determination unit 114 determines to perform photographing a plurality of times near the defective region as the photographing mode of rephotographing.

The vicinity of the defective region described herein refers to a range in which the defective region is included in the angle of view from the resolution of the photographing camera 13 and the visual field angle of the lens based on position information obtained when the shape of the defective region is estimated for the portion detected as the defective region. At this time, the photographing mode determination unit 114 changes a movement route of the mobile body 10 such that the mobile body 10 goes around the defective region. A circumference CP20 about a point that is a certain distance apart from the defective region DA to the vertical direction when the defective region DA is viewed as a plane as illustrated in, for example, Fig. 10 is used as a movement route to perform photographing a plurality of times.

A difference in the gloss is produced depending on a photographing direction (photographing angle), so that, by performing photographing from a plurality of photographing directions, portions at which textures cannot be acquired due to the gloss decrease from photographed images, and, as a result, it is possible to prevent defective regions from being hardly produced.

On the other hand, when it is determined in step S113 that the defective region is not produced due to the gloss, the processing proceeds to step S115.

In step S115, the photographing mode determination unit 114 determines whether or not the defective region has been produced by a repetition pattern that is the non-creation factor. Here, for example, the state determination unit 113 extracts a portion corresponding to a defective region of a photographed image and performs template matching, or extracts feature points near a portion corresponding to the defective region of the photographed image and determines to what degree identical feature points exist on the photographed image, and determines whether or not there is the repetition pattern.

When it is determined in step S115 that the defective region has been produced due to the repetition pattern, the processing proceeds to step S116, and the photographing mode determination unit 114 determines to approach and photograph the defective region as the photographing mode of rephotographing.

At this time, the photographing mode determination unit 114 changes a movement route of the mobile body 10 such that the mobile body 10 approaches the defective region. A position that is at a distance that is half a calculated distance from the original photographing point SP to the defective region DA as illustrated in, for example, Fig. 11 is used as a photographing point SP31 to perform photographing. Furthermore, the photographing point SP31 may be determined as a position at which the photographing point SP31 settles at the angle of view based on the size of the defective region DA and the angle of view of the photographing camera 13.

Consequently, photographing details of the repetition pattern is performed by approaching the defective region, so that feature points that are not repeated portions of these details are extracted, and as a result, it is possible to prevent defective regions from being hardly produced.

On the other hand, when it is determined in step S115 that the defective region is not produced due to the gloss, the processing proceeds to step S117.

In step S117, the photographing mode determination unit 114 determines whether or not the defective region has been produced due to lack of a texture that is the non-creation factor. Here, for example, the state determination unit 113 extracts feature points near a portion corresponding to a defective region of a photographed image, and determines whether or not the texture lacks according to whether or not the number of the feature points is less than a certain number.

When it is determined in step S117 that the defective region has been produced due to the lack of the texture, the processing proceeds to step S118, and the photographing mode determination unit 114 determines whether or not the lack of the texture can be specified. Here, for example, the state determination unit 113 calculates a brightness average value near a portion corresponding to a defective region of a photographed image, and specifies the cause of the lack of the texture when the brightness average value is larger than a certain upper limit value or is smaller than a certain lower limit value.

When it is determined in step S118 that the cause of the lack of the texture cannot be specified, that is, when the brightness average value near the portion corresponding to the defective region of the photographed image is smaller than the upper limit value or is larger than the lower limit value, it is determined that the cause of the lack of the texture is unclear, and the processing transitions to step S116. That is, when the cause of the lack of the texture is unclear, rephotographing is performed by approaching the defective region.

On the other hand, when it is determined in step S118 that the cause of the lack of the texture can be specified, the processing proceeds to step S119 in Fig. 8, and the photographing mode determination unit 114 determines whether or not the cause of the lack of the texture is darkness.

When it is determined in step S119 that the cause of the lack of the texture is darkness, that is, when the brightness average value near the portion corresponding to the defective region of the photographed image is smaller than the lower limit value, the processing proceeds to step S120.

In step S120, the photographing mode determination unit 114 determines to increase the shutter speed and perform photographing at the photographing point as the photographing mode of rephotographing. Here, although photographing a dark photographed image is prevented by increasing the shutter speed, other photographing parameters such as a gain may be adjusted.

On the other hand, when it is determined in step S119 that the cause of the lack of the texture is not darkness, that is, when the brightness average value near the portion corresponding to the defective region of the photographed image is larger than the upper limit value, the processing proceeds to step S121.

In step S121, the photographing mode determination unit 114 determines to decrease the shutter speed and perform photographing at the photographing point as the photographing mode of rephotographing. Here, although photographing too bright a photographed image is prevented by decreasing the shutter speed, other photographing parameters such as a gain may be adjusted.

As described above, photographing is performed by appropriately adjusting the shutter speed, so that a sufficient texture is secured in the photographed image, and as a result, it is possible to prevent defective regions from being hardly produced.

By the way, when it is determined in step S117 in Fig. 7 that the defective region is not produced due to the lack of the texture, the processing proceeds to step S122 in Fig. 8, and the photographing mode determination unit 114 determines whether or not there is distortion around the defective region. Here, the state determination unit 113 determines whether or not there is the distortion around the defective region according to whether or not a residual at a time of calculation of point cloud data when, for example, 3D point cloud data is created is larger than a certain value.

When it is determined in step S122 that there is the distortion around the defective region, the processing proceeds to step S123, and the photographing mode determination unit 114 determines to move away from and photograph the defective region as the photographing mode of rephotographing.

At this time, the photographing mode determination unit 114 changes a movement route of the mobile body 10 such that the mobile body 10 moves away from the defective region. A position that is at a distance that is 1.5 times the calculated distance from the original photographing point SP to the defective region DA as illustrated in, for example, Fig. 12 is used as a photographing point SP41 to perform photographing.

As described above, a photographing range widens apart from the defective region, so that portions that match with other photographed images increase and the distortion is reduced, and, as a result, it is possible to prevent defective regions from being hardly produced.

On the other hand, when it is determined in step S122 that there is not distortion around the defective region, the processing proceeds to step S124, and the photographing mode determination unit 114 determines to perform photographing a plurality of times near the defective region as the photographing mode of rephotographing.

As described above, photographing is performed a plurality of times near the defective region, so that it is easy to avoid the cause of the defective region such as noise that cannot be specified, and as a result, it is possible to prevent defective regions from being hardly produced.

According to the above processing, when a defective region is detected at a time of photographing at a certain photographing point, a photographing mode of rephotographing including changing a movement route is determined according to the state of the defective region, and instruction information for instructing rephotographing according to the determined photographing mode is generated. Consequently, the mobile body or the photographing camera can more reliably perform rephotographing according to the photographing mode based on the instruction information. As a result, it is possible to reduce a photographed image in which a defective region is produced, and acquire suitable point cloud data.

### <5. Processing of Determining Photographing Mode of Not Changing Movement Route>

According to the above-described processing of determining the photographing mode, the photographing mode of rephotographing including changing the movement route is determined. It is concerned that, when the movement route is changed, a mobile body such as a drone cannot trace all photographing points depending on a remaining life of a mounted battery.

Hence, hereinafter, processing of determining a photographing mode of rephotographing that does not include changing a movement route by changing the posture of the photographing camera 13 will be described with reference to flowcharts in Figs. 13 and 14.

Since each processing in steps S211, S213, S214, S216, S217, S218, and S221 of determining a non-creation factor of a photographing target in Figs. 13 and 14 is the same as each processing in steps S111, S113, S115, S117, S118, S119, and S122 in Figs. 7 and 8, description thereof will be omitted as appropriate.

That is, when it is determined in step S211 that a defective region has been produced by a moving object, the processing proceeds to step S212, and the photographing mode determination unit 114 determines to change the posture of the photographing camera 13 and photograph the defective region a plurality of times at a newly added photographing point as the photographing mode of rephotographing.

As illustrated in, for example, Fig. 15, a photographing result obtained at a photographing point SP50 on the movement route FP indicates that a defective region has been detected. In this case, positions AP (three portions in the example in Fig. 15) closest to the defective region (photographing point SP50) are added as photographing points on the movement route FP to move to in future.

That is, it is determined in step S212 to perform photographing while directing the photographing direction of the photographing camera 13 toward the defective region (photographing point SP50) at each position AP (added photographing point). Consequently, it is possible to photograph portions that cannot be photographed due to moving objects, and prevent defective regions from being hardly produced.

Thus, according to the processing of determining the photographing mode of not changing the photographing trajectory, the photographing mode of rephotographing from a photographing point added on a future movement route is determined.

Note that, when it is determined in step S213 that the defective region has been produced due to gloss, the processing proceeds to step S212, and it is determined to change the posture of the photographing camera 13 and photograph the defective region a plurality of times at a newly added photographing point as the photographing mode of rephotographing.

Furthermore, when it is determined in step S214 that the defective region has been produced due to a repetition pattern, the processing proceeds to step S215, and the photographing mode determination unit 114 determines to change the posture of the photographing camera 13 and zoom in and photograph the defective region at the newly added photographing point as the photographing mode of rephotographing.

Consequently, details of the repetition pattern are zoomed in and photographed, so that feature points that are not repeated portions of these details are extracted, and as a result, it is possible to prevent defective regions from being hardly produced.

Note that, when it is determined in step S217 that the cause of the lack of the texture cannot be specified, that is, when the brightness average value near the portion corresponding to the defective region of the photographed image is smaller than the upper limit value or is larger than the lower limit value, the processing proceeds to step S215. That is, when it is determined that the cause of the lack of the texture is unclear, it is determined to change the posture of the photographing camera 13 at the added photographing point, and zoom in and photograph the defective region.

Furthermore, when it is determined in step S218 in Fig. 14 that the cause of the lack of the texture is darkness, the processing proceeds to step S219, and the photographing mode determination unit 114 determines to change the posture of the photographing camera 13, increase the shutter speed, and perform photographing at the newly added photographing point as the photographing mode of rephotographing. Here, although photographing a dark photographed image is prevented by increasing the shutter speed, other photographing parameters such as a gain may be adjusted.

On the other hand, when it is determined in step S218 that the cause of the lack of the texture is not darkness, the processing proceeds to step S220, and the photographing mode determination unit 114 determines to change the posture of the photographing camera 13, decrease the shutter speed, and perform photographing at the newly added photographing point as the photographing mode of rephotographing. Here, although photographing too bright a photographed image is prevented by decreasing the shutter speed, other photographing parameters such as a gain may be adjusted.

As described above, photographing is performed by appropriately adjusting the shutter speed, so that a sufficient texture is secured in the photographed image, and as a result, it is possible to prevent defective regions from being hardly produced.

Furthermore, when it is determined in step S221 that there is the distortion around the defective region, the processing proceeds to step S222, and the photographing mode determination unit 114 determines to change the posture of the photographing camera 13 and zoom out and photograph the defective region at the newly added photographing point as the photographing mode of rephotographing.

As described above, zooming out expands the photographing range, so that portions that match with other photographed images increase and the distortion is reduced, and, as a result, it is possible to prevent defective regions from being hardly produced. Note that the newly added photographing point described herein may be a farthest position at which the defective region can be photographed.

On the other hand, when it is determined in step S221 that there is not distortion around the defective region, the processing proceeds to step S223, and the photographing mode determination unit 114 determines to change the posture of the photographing camera 13 and photograph the defective region a plurality of times using a position to which the defective region is the closest as the newly added photographing point as the photographing mode of rephotographing.

As described above, photographing is performed a plurality of times near the defective region, so that it is easy to avoid the cause of the defective region such as noise that cannot be specified, and as a result, it is possible to prevent defective regions from being hardly produced.

According to the above processing, when a defective region is detected at a time of photographing at a certain photographing point, a photographing mode of rephotographing that does not include changing a movement route is determined according to the state of the defective region, and instruction information for instructing rephotographing (additional photographing) according to the determined photographing mode is generated. Consequently, even in a situation that the remaining battery life is not sufficient to change the movement route, the mobile body or the photographing camera can more reliably perform rephotographing according to the photographing mode based on the instruction information. As a result, it is possible to reduce a photographed image in which a defective region is produced, and acquire suitable point cloud data.

### <6. Selection Processing Matching Setting Mode>

A method of determining the photographing mode of rephotographing that includes changing the movement route, and a method of determining the photographing mode of rephotographing that does not include changing the movement route have been described above as the processing of determining the photographing mode.

In an example not covered by the claimed invention, these two determination methods may be selected according to a setting mode set by the user.

Fig. 16 is a flowchart for explaining processing of selecting the determination method matching the setting mode. The processing in Fig. 16 can be executed in step S36 in Fig. 6.

In step S311, the photographing mode determination unit 114 determines whether or not the setting mode set by the user is a trajectory priority mode of prioritizing movement along a photographing trajectory (movement route).

When it is determined in step S311 that the setting mode is not the trajectory priority mode, the processing proceeds to step S312, and the photographing mode determination unit 114 executes the processing of determining the photographing mode of changing the photographing trajectory (movement route). That is, when the setting mode is not the trajectory priority mode, the processing of determining the photographing mode described with reference to Figs. 7 and 8 is executed.

On the other hand, when it is determined in step S311 that the setting mode is the trajectory priority mode, the processing proceeds to step S313, and the photographing mode determination unit 114 executes the processing of determining the photographing mode of changing the posture of the photographing camera 13. That is, when the setting mode is the trajectory priority mode, the processing of determining the photographing mode described with reference to Figs. 13 and 14 is executed.

As described above, it is possible to select which one of the processing of determining the photographing mode of changing the movement route and the processing of determining the photographing mode of not changing the movement route to execute according to the setting mode set by the user.

### <7. Selection Processing Matching Remaining Battery Life>

Since changing a movement route consumes battery power, which one of the processing of determining the photographing mode of changing the movement route and the processing of determining the photographing mode of not changing the movement route to execute may be selected according to the remaining battery life.

Fig. 17 is a block diagram illustrating another configuration example of the photographing system to which the technique according to the present disclosure has been applied.

The photographing system 1 in Fig. 17 differs from the photographing system 1 in Fig. 3 in newly providing a battery management unit 151 to the mobile body 10.

The battery management unit 151 generates remaining battery life information indicating a remaining battery life by managing a remaining life of a battery (not illustrated) mounted on the mobile body 10. The generated remaining battery life information is transmitted to the control device 30 via the communication unit 18 under control of the control unit 20.

The control unit 40 (photographing mode determination unit 114) of the control device 30 determines a photographing mode of rephotographing based on the remaining battery life indicated by the remaining battery life information from the mobile body 10. More specifically, the photographing mode determination unit 114 selects on the basis of the remaining battery life of the mobile body 10 which one of the processing of determining the photographing mode of changing the movement route and the processing of determining the photographing mode of not changing the movement route to execute.

Fig. 18 is a flowchart for explaining processing of selecting the determination method matching the remaining battery life. The processing in Fig. 18 can be also executed in step S36 in Fig. 6.

In step S331, the photographing mode determination unit 114 determines whether or not the remaining battery life indicated by the remaining battery life information from the mobile body 10 is sufficient, more specifically, whether or not the battery life remains until last photographing even when the photographing trajectory (movement route) is changed.

When it is determined in step S331 that the remaining battery life is sufficient, the processing proceeds to step S332, and the photographing mode determination unit 114 executes the processing of determining the photographing mode of changing the photographing trajectory (movement route). That is, when the remaining battery life is sufficient, the processing of determining the photographing mode described with reference to Figs. 7 and 8 is executed.

On the other hand, when it is determined in step S331 that the remaining battery life is not sufficient, the processing proceeds to step S333, and the photographing mode determination unit 114 executes the processing of determining the photographing mode of changing the posture of the photographing camera 13. That is, when the remaining battery life is not sufficient, the processing of determining the photographing mode described with reference to Figs. 13 and 14 is executed.

As described above, it is also possible to select according to the remaining battery life which one of the processing of determining the photographing mode of changing the movement route and the processing of determining the photographing mode of not changing the movement route to execute.

### <8. Others>

In the above-described embodiments, each functional block illustrated in Fig. 4 is implemented by the control unit 40 of the control device 30. The present disclosure is not limited thereto, and part or all of the functional blocks illustrated in Fig. 4 may be implemented by the control unit 20 of the mobile body 10. In this case, the mobile body 10 can detect a defective region in real time while performing photographing.

### <9. Configuration Example of Computer>

The above-described series of processing can also be executed by hardware or software. In a case where the series of processing is executed by software, a program that constitutes the software is installed on a computer. In this case, the computer includes, for example, a computer built into dedicated hardware and a general-purpose personal computer in which various programs are installed to enable the personal computer to execute various types of functions.

Fig. 19 is a block diagram illustrating a configuration example of computer hardware that executes the above-described series of processing using a program.

In a computer 200, a CPU 201, a ROM 202, and a RAM 203 are connected to each other via a bus 204.

An input/output interface 205 is further connected to the bus 204. An input unit 206, an output unit 207, a storage unit 208, a communication unit 209, and a drive 210 are connected to the input/output interface 205.

The input unit 206 is constituted of a keyboard, a mouse, a microphone, or the like. The output unit 207 includes a display, a speaker, and the like. The storage unit 208 is a hard disk, non-volatile memory, or the like. The communication unit 209 is a network interface or the like. The drive 210 drives a removable medium 211 such as a magnetic disk, an optical disc, a magnetooptical disk, or semiconductor memory.

In the computer 200 having the above configuration, for example, the CPU 201 performs the above-described series of processing by loading a program stored in the storage unit 208 to the RAM 203 via the input/output interface 205 and the bus 204 and executing the program.

The program executed by the computer 200 (CPU 201) may be recorded on, for example, the removable medium 211 for example as a package medium so as to be provided. The program can also be provided via a wired or wireless transmission medium such as a local area network, the Internet, or digital satellite broadcasting.

In the computer 200, the program can be installed in the storage unit 208 via the input/output interface 205 by inserting the removable medium 211 into the drive 210. The program can be received by the communication unit 209 via a wired or wireless transmission medium to be installed in the storage unit 208. In addition, the program may be installed in advance in the ROM 202 or the storage unit 208.

Note that the program executed by the computer 200 may be a program that performs processing chronologically in the order described in the present specification or may be a program that performs processing in parallel or at a necessary timing such as a called time.

The embodiments of the present disclosure are not limited to the above-described embodiments, and various modifications can be made without departing from the essential spirit of the present disclosure.

The advantageous effects described herein are merely exemplary and are not limited, and other advantageous effects may be obtained.

### [Reference Signs List]

- 1: Photographing system
- 10: Mobile body
- 11: GPS reception unit
- 12: Sensor
- 13: Photographing camera
- 14: Camera angle adjustment unit
- 15: Rotor driving unit
- 16: Storage unit
- 17: Output unit
- 18: Communication unit
- 20: Control unit
- 30: Control device
- 31: Communication unit
- 32: Storage unit
- 33: Output unit
- 111: 3D point cloud data creation unit
- 112: Defective region detection unit
- 113: State determination unit
- 114: Photographing mode determination unit
- 115: Instruction information generation unit
- 151: Battery management unit

## Claims

1. A photographing instruction method comprising:
detecting a defective region of a photographing target based on a photographed image shot from a mobile body (10) that moves on a predetermined movement route, wherein three-dimensional point cloud data of the photographing target is created based on a plurality of photographed images including the photographed image, and the defective region is detected during photographing of the photographing target in parallel with the creation of the three-dimensional point cloud data;
determining a photographing mode of rephotographing of the defective region according to a state of the defective region when detecting the defective region;
generating instruction information for instructing the rephotographing according to the determined photographing mode;
wherein the determining the photographing mode of the rephotographing is further based on a remaining battery life of the mobile body when detecting the defective region and further comprises selecting between changing the movement route and changing a posture of a camera included in the mobile body based on the remaining battery life.

2. The photographing instruction method according to claim 1, further comprising:
creating three-dimensional point cloud data of the photographing target based on a plurality of the photographed images shot at a plurality of photographing points on the movement route; and
detecting as the defective region a region for which the point data is not created in the three-dimensional point cloud data.

3. The photographing instruction method according to claim 2, further comprising detecting a portion at which pixels do not match between the plurality of photographed images as the region for which the point data is not created.

4. The photographing instruction method according to claim 3, further comprising:
determining as a state of the defective region the state indicating a cause why point data of the photographing target is not created; and
determining the photographing mode of the rephotographing according to the non-creation factor.

5. The photographing instruction method according to claim 4, further comprising determining the state indicating the cause based on image processing of the photographed image in which the defective region has been detected.

6. The photographing instruction method according to claim 1, further comprising determining to change the movement route as the photographing mode.

7. The photographing instruction method according to claim 6, further comprising changing the movement route such that the mobile body i) goes around the defective region; ii) approaches the defective region; or iii) moves away from the defective region.

8. The photographing instruction method according to claim 1, further comprising determining to either i) perform photographing a plurality of times as the photographing mode; or ii) change a shutter speed as the photographing mode.

9. The photographing instruction method according to claim 1, further comprising determining to change a posture of a camera included in the mobile body as the photographing mode.

10. The photographing instruction method according to claim 9, further comprising:
adding on the movement route a photographing point for the rephotographing;
and
changing the posture of the camera at the added photographing point.

11. The photographing instruction method according to claim 10, further comprising determining to: i) perform photographing a plurality of times at the added photographing point as the photographing mode; or ii) change a shutter speed at the added photographing point as the photographing mode; or iii) change a focal distance at the added photographing point as the photographing mode.

12. A mobile body (10) comprising:
a defective region detection unit (112) that detects a defective region of a photographing target based on a photographed image shot from a mobile body that moves on a predetermined movement route, wherein three-dimensional point cloud data of the photographing target is created based on a plurality of photographed images including the photographed image, and the defective region is detected during photographing of the photographing target in parallel with the creation of the three-dimensional point cloud data;
a photographing mode determination unit (114) that determines a photographing mode of rephotographing of the defective region according to a state of the defective region when detecting the defective region; and
an instruction information generation unit (115) that generates instruction information for instructing the rephotographing according to the determined photographing mode;
wherein the photographing mode determination unit (114) is configured to determine the photographing mode of the rephotographing further based on a remaining battery life of the mobile body when detecting the defective region and is further configured to select between changing the movement route and changing a posture of a camera included in the mobile body based on the remaining battery life.

13. A program causing a computer to execute processing of a method according to claim 1.

## Patentansprüche

1. Fotografieranweisungsverfahren, umfassend:
Erfassen eines fehlerhaften Bereichs eines Fotografierziels basierend auf einem fotografierten Bild, das von einem mobilen Körper (10) aufgenommen wurde, der sich auf einer vorbestimmten Bewegungsroute bewegt, wobei dreidimensionale Punktwolkendaten des Fotografierziels basierend auf einer Vielzahl von fotografierten Bildern erstellt werden, die das fotografierte Bild einschließen, und der fehlerhafte Bereich während des Fotografierens des Fotografierziels parallel zu der Erstellung der dreidimensionalen Punktwolkendaten erfasst wird;
Bestimmen eines Fotografiermodus eines erneuten Fotografierens des fehlerhaften Bereichs gemäß einem Zustand des fehlerhaften Bereichs, wenn der fehlerhafte Bereich erfasst wird;
Erzeugen von Anweisungsinformationen zum Anweisen des erneuten Fotografierens gemäß dem bestimmten Fotografiermodus;
wobei das Bestimmen des Fotografiermodus der erneuten Fotografier ferner auf einer verbleibenden Batterielebensdauer des mobilen Körpers, wenn der defekten Bereich erfasst wird, basiert und ferner das Auswählen zwischen einem Ändern der Bewegungsroute und dem Ändern einer Stellung einer Kamera, die in dem mobilen Körper eingeschlossen ist, basierend auf der verbleibenden Batterielebensdauer umfasst.

2. Fotografieranweisungsverfahren nach Anspruch 1, ferner umfassend:
Erstellen dreidimensionaler Punktwolkendaten des Fotografierziels basierend auf einer Vielzahl der fotografierten Bilder, die an einer Vielzahl von Fotografierpunkten auf der Bewegungsroute aufgenommen wurden; und
Erfassen eines Bereichs, für den die Punktdaten in den dreidimensionalen Punktwolkendaten nicht erstellt werden, als den fehlerhaften Bereich.

3. Fotografieranweisungsverfahren nach Anspruch 2, ferner umfassend das Erfassen eines Abschnitts, an dem Pixel zwischen der Vielzahl von fotografierten Bildern nicht übereinstimmen, als den Bereich, für den die Punktdaten nicht erstellt werden.

4. Fotografieranweisungsverfahren nach Anspruch 3, ferner umfassend:
Bestimmen des Zustands, der eine Ursache dafür angibt, warum Punktdaten des Fotografierobjekts nicht erstellt werden, als einen Zustand des fehlerhaften Bereichs; und
Bestimmen des Fotografiermodus des erneuten Fotografierens gemäß dem Nichterstellungsfaktor.

5. Fotografieranweisungsverfahren nach Anspruch 4, ferner umfassend das Bestimmen des Zustands, der die Ursache angibt, basierend auf Bildverarbeitung des fotografierten Bilds, in dem der fehlerhafte Bereich erfasst wurde.

6. Fotografieranweisungsverfahren nach Anspruch 1, ferner umfassend das Bestimmen, die Bewegungsroute als den Fotografiermodus zu ändern.

7. Fotografieranweisungsverfahren nach Anspruch 6, ferner umfassend das Ändern der Bewegungsroute derart, dass der bewegliche Körper i) den fehlerhaften Bereich umgeht; ii) sich dem fehlerhaften Bereich nähert; oder iii) sich von dem defekten Bereich wegbewegt.

8. Fotografieranweisungsverfahren nach Anspruch 1, ferner umfassend das Bestimmen, entweder i) das Fotografieren eine Vielzahl von Malen als den Fotografiermodus durchzuführen; oder ii) eine Verschlusszeit als den Fotografirmodus ändern.

9. Fotografieranweisungsverfahren nach Anspruch 1, ferner umfassend das Bestimmen, eine Stellung einer Kamera, die in dem mobilen Körper eingeschlossen ist, als den Fotografiermodus zu ändern.

10. Fotografieranweisungsverfahren nach Anspruch 9, ferner umfassend:
Hinzufügen eines Fotografierpunkts für das erneute Fotografieren auf der Bewegungsroute; und
Ändern der Stellung der Kamera an dem hinzugefügten Fotografierpunkt.

11. Fotografieranweisungsverfahren nach Anspruch 10, ferner umfassend das Bestimmen zum: i) Durchführen des Fotografierens eine Vielzahl von Malen an dem hinzugefügten Fotografierpunkt als den Fotografiermodus; oder ii) Ändern einer Verschlusszeit an dem hinzugefügten Fotografierpunkt als den Fotografiermodus; oder iii) Ändern einer Brennweite an dem hinzugefügten Fotografierpunkt als den Fotografiermodus.

12. Beweglicher Körper (10), umfassend:
eine Defektbereicherfassungseinheit (112), die einen fehlerhaften Bereich eines Fotografieziels basierend auf einem fotografierten Bild erfasst, das von einem mobilen Körper aufgenommen wurde, der sich auf einer vorbestimmten Bewegungsroute bewegt, wobei dreidimensionale Punktwolkendaten des Fotografieziels basierend auf einer Vielzahl von fotografierten Bildern erstellt werden, die das fotografierte Bild einschließen, und der fehlerhafte Bereich während des Fotografierens des Fotografierziels parallel zu der Erstellung der dreidimensionalen Punktwolkendaten erfasst wird;
eine Fotografiermodusbestimmungseinheit (114), die einen Fotografiermodus für das erneute Fotografieren des fehlerhaften Bereichs gemäß einem Zustand des fehlerhaften Bereichs bestimmt, wenn der fehlerhafte Bereich erfasst wird; und
eine Anweisungsinformationserzeugungseinheit (115), die Anweisungsinformationen zum Anweisen des erneuten Fotografierens gemäß dem bestimmten Fotografiermodus erzeugt;
wobei die Fotografiermodusbestimmungseinheit (114) konfiguriert ist, um den Fotografiermodus der erneuten Fotografierens ferner basierend auf einer verbleibenden Batterielebensdauer des mobilen Körpers zu bestimmen, wenn der fehlerhafte Bereich erfasst wird, und ferner konfiguriert ist, um basierend auf der verbleibenden Batterielebensdauer zwischen dem Ändern der Bewegungsroute und dem Ändern einer Stellung einer Kamera auszuwählen, die in dem mobilen Körper eingeschlossen ist.

13. Programm, das einen Computer veranlasst, das Verarbeiten eines Verfahrens nach Anspruch 1 auszuführen.

## Revendications

1. Procédé d'instruction de photographie comprenant :
la détection d'une région défectueuse d'une cible à photographier sur la base d'une image photographiée prise depuis un corps mobile (10) qui se déplace sur un itinéraire de déplacement prédéterminé, dans lequel des données de nuage de points tridimensionnel de la cible à photographier sont créées sur la base d'une pluralité d'images photographiées comportant l'image photographiée, et la région défectueuse est détectée pendant la photographie de la cible à photographier en parallèle avec la création des données de nuage de points tridimensionnel ;
la détermination d'un mode de photographie consistant à rephotographier la région défectueuse selon un état de la région défectueuse lors de la détection de la région défectueuse ;
la génération d'informations d'instruction pour donner l'instruction de rephotographier selon le mode de photographie déterminé ;
dans lequel la détermination du mode de photographie consistant à rephotographier est en outre basée sur une durée de vie de batterie restante du corps mobile lors de la détection de la région défectueuse et comprend en outre la sélection entre le changement de l'itinéraire de déplacement et le changement d'une posture d'une caméra incluse dans le corps mobile sur la base de la durée de vie de batterie restante.

2. Procédé d'instruction de photographie selon la revendication 1, comprenant en outre :
la création de données de nuage de points tridimensionnel de la cible à photographier sur la base d'une pluralité des images photographiées prises à une pluralité de points à photographier sur l'itinéraire de déplacement ; et
la détection, comme la région défectueuse, d'une région pour laquelle les données des points ne sont pas créées dans les données de nuage de points tridimensionnel.

3. Procédé d'instruction de photographie selon la revendication 2, comprenant en outre la détection d'une partie au niveau de laquelle les pixels ne concordent pas entre la pluralité d'images photographiées comme la région pour laquelle les données de points ne sont pas créées.

4. Procédé d'instruction de photographie selon la revendication 3, comprenant en outre :
la détermination, comme un état de la région défectueuse, de l'état indiquant une cause pour laquelle des données de points de la cible à photographier ne sont pas créées ; et
la détermination du mode de photographie consistant à rephotographier selon le facteur de non-création.

5. Procédé d'instruction de photographie selon la revendication 4, comprenant en outre la détermination de l'état indiquant la cause sur la base d'un traitement d'images de l'image photographiée dans laquelle la région défectueuse a été détectée.

6. Procédé d'instruction de photographie selon la revendication 1, comprenant en outre la détermination de modifier l'itinéraire de déplacement comme le mode de photographie.

7. Procédé d'instruction de photographie selon la revendication 6, comprenant en outre le changement de l'itinéraire de déplacement de telle sorte que le corps mobile i) tourne autour de la région défectueuse ; ii) s'approche de la région défectueuse ; ou iii) s'éloigne de la région défectueuse.

8. Procédé d'instruction de photographie selon la revendication 1, comprenant en outre la détermination soit i) de réaliser la photographie une pluralité de fois comme le mode de photographie ; soit ii) de changer une vitesse d'obturateur comme le mode de photographie.

9. Procédé d'instruction de photographie selon la revendication 1, comprenant en outre la détermination de changer une posture d'une caméra incluse dans le corps mobile comme le mode de photographie.

10. Procédé d'instruction de photographie selon la revendication 9, comprenant en outre :
l'ajout sur l'itinéraire de déplacement d'un point à photographier pour la rephotographie ; et
le changement de la posture de la caméra au point à photographier ajouté.

11. Procédé d'instruction de photographie selon la revendication 10, comprenant en outre la détermination de : i) réaliser la photographie une pluralité de fois au point à photographier ajouté comme le mode de photographie ; ou ii) changer une vitesse d'obturateur au point à photographier ajouté comme le mode de photographie ; ou iii) changer une distance focale au point à photographier ajouté comme le mode de photographie.

12. Corps mobile (10) comprenant :
une unité de détection de région défectueuse (112) qui détecte une région défectueuse d'une cible à photographier sur la base d'une image photographiée prise depuis un corps mobile qui se déplace sur un itinéraire de déplacement prédéterminé, dans lequel des données de nuage de points tridimensionnel de la cible à photographier sont créées sur la base d'une pluralité d'images photographiées comportant l'image photographiée, et la région défectueuse est détectée pendant la photographie de la cible à photographier en parallèle avec la création des données de nuage de points tridimensionnel ;
une unité de détermination de mode de photographie (114) qui détermine un mode de photographie consistant à rephotographier la région défectueuse selon un état de la région défectueuse lors de la détection de la région défectueuse ; et
une unité de génération d'informations d'instruction (115) qui génère des informations d'instruction pour donner l'instruction de rephotographier selon le mode de photographie déterminé ;
dans lequel l'unité de détermination de mode de photographie (114) est configurée pour déterminer le mode de photographie consistant à rephotographier en outre sur la base d'une durée de vie de batterie restante du corps mobile lors de la détection de la région défectueuse et est en outre configurée pour sélectionner entre le changement de l'itinéraire de déplacement et le changement d'une posture d'une caméra incluse dans le corps mobile sur la base de la durée de vie de batterie restante.

13. Programme amenant un ordinateur à exécuter le traitement d'un procédé selon la revendication 1.
